# EUROPEAN PATENT APPLICATION

(11) **EP 1 734 740 A1**
(43) Date of publication of application: **20.12.2006**
(21) Application number: 05076425.7
(22) Date of filing: 17.06.2005
(51) Int. Cl.: H04N 5/222

(54) **Improved method for manufacturing audio visual productions**

(71) Applicant: De Haas, Johannes M.C.W., 4814 GG Breda (NL)
(72) Inventor: De Haas, Johannes M.C.W., 4814 GG Breda (NL)

(57) **Abstract**

The invention has the aim to process image and sound material recorded with a camera by means of a new inventive workflow, the so called Penta workflow, digital tape or hard disk raid according to HD 4:4:4 standard directly via a specific interface, the duallink system, in an HD-machine, by which the elapsed time of cinematographic material is strongly limited in a surprisingly way, in which the recording and processing equipment is placed as a mobile composition in a van and by which with the above described mobile composition more audiovisual material with a high quality can be produced within the existing budget.

## Description

The present invention relates to a method to convert image and sound material, recorded with a camera by means of a procedure, called workflow, in an electronic way into several cinematographic, television and multimedia productions and such, in which the mentioned camera applies the image and sound material on a digital tape or hard disk raid HD 4:4:4 or HD 4:2:2, in which the recorded material is edited, processed or mixed to the required audiovisual products in a so called elapsed time, in which due to high cost for used material and material, actors, concerned executive and supporting persons and such, especially the elapsed time must be limited in order to produce as much audiovisual productions as possible within the available budgets.

In the present practice a number of mentioned workflows are used, which are rather time consuming and with that demand a lot of personnel handlings, so that the audiovisual end product becomes rather expensive and with the generally not too large budgets a smaller number of audiovisual productions can be made. Below, three used workflows are described in short.

### WORKFLOW 1:

The camera operator records from his camera onto a digital tape (high-grade quality tape for recording film and sound) of type HD 4:4:4 or HD 4:2:2 (high Definition), in which with the digital tape HD 4:4:4 all colours are directly compressed recorded and with the digital tape HD 4:2:2 the colours are compressed, through which the colours red and bleu are recorded for a limited degree and by which a loss of colour pixels occurs. Following, the mentioned digital tape is conveyed to a unit where it is read in. The mentioned reading-in is done on a hard disk raid (= a series of coupled hard disks) and is further recorded in a SAN-drive (=library consisting of hard disks from which one can centrally pick up data from a network) and one can locally approach the saved data via the mentioned network. Then the file HD 4:4:4 is processed and the file HD 4:2:2 is decompressed or unpacked. Following, the digitape is processed off-line (= processing material from a copy and then write back) or on-line (= processing material in its original without having to write back). After the above described process of the digital tape, the files are mixed (= written away in the correct format).

Schematically, in handling/processing and needed time for 5 minutes of recorded time looks as follows in workflow 1:

### WORKFLOW 1:

| **HANDLING/PROCESSING** | **ELAPSED TIME (IN MINUTES)** |
|---|---|
| Camera operator | Variable |
| Tape | 15' |
| Tape operator | 15' |
| Video assistant | 15' |
| Courier | Variable |
| **Day 2:** | |
| Digital operator | 180' |
| Editor | 120' |
| Viewing | 120' |
| Saving | 60' |

### WORKFLOW 2:

The mentioned camera recordings go to a hard disk raid HD 4:4:4 or HD 4:2:2. Transport from hard disk raid (= a set of hard disks on the camera) to process unit for reading-in to SAN-drive (for explanation see workflow 1). Following, processing hard disk raid HD 4:4:4 or decompressing hard disk raid HD 4:2:2. Then the off-line or on-line processing takes place, after which the mixing of the file on the hard disk to the required format is executed.

Schematically, in handling/processing and needed time for 5 minutes of recorded time looks as follows in workflow 2:

### WORKFLOW 2:

| **HANDLING/PROCESSING** | **ELAPSED TIME (IN MINUTES)** |
|---|---|
| Camera operator | Variable |
| Disk raid | 60' |
| Disk operator | 15' |
| Courier | Variable |
| **Day 2** | |
| Disk operator | 30' |
| Editor | 120' |
| Viewing | 120' |
| Saving | 60' |

### WORKFLOW 3:

The mentioned camera recordings on 16 mm or 35 mm film are physically transported to the development studio. In the mentioned development studio the film is scanned, read in on hard disk and written to a SAN-drive. Following, the file is processed, which can be done off-line or on-line (for example with special effects, executing extra editing and such). After processing, the so called extraction takes place (=calculation with the computer of the edits on the material and processing it, in which the speed is computer dependable) to the required format and carrier (given by the client) writing away and putting back on film.

Schematically, in handling/processing and needed time for 5 minutes of recorded time looks as follows in workflow 3:

### WORKFLOW 3:

| **HANDLING/PROCESSING** | **ELAPSED TIME (IN MINUTES)** |
|---|---|
| Camera operator | Variable |
| Film | 15' |
| Courier | Variable |
| **Day 2:** | |
| Developing | 120' |
| Courier | Variable |
| **Day 3:** | |
| Digital scan operator | 60' |
| Editing | 120' |
| Viewing | 120' |
| Saving | 60' |

With non of the previous described "workflows" the possibility exits to show a video or a film playback immediately on the set for approval by the director, producer and/or actors.

Further it must be noted, that working with compressed material still a lot of finishing must be done for the addition of missed material (so called "pixel loss" on HD 4:2:2). Also, one must take into account that with the scanning in and out of a film on cellulose tape a loss of pixels occurs.

The above shows, that the existing or known "workflows" for processing image and sound material on tape to finished audiovisual productions as regards to spent time, personnel efforts, material with accompanying cost, have a number of disadvantages to deliver more audiovisual productions within the limits of the available budgets. Also, for the director and producer it is a great advantage to be able to watch the recordings sooner.

It is the aim of the present invention to develop or modify such a "workflow", the so called Penta Workflow from the described workflows 1, 2, 3 with which in a very efficient way audiovisual productions can be made.

For this, a method, being a workflow, called Penta Workflow is further developed and/or modified in a very inventive way, characterized in that the image and sound material of the recording camera with digital tape or hard disk raid according to HD 4:4:4 standard is directly processed to the required audiovisual product by means of a connected specific interface thereon in a connected HD-processing machine thereon.

The advantage is that, the camera operator makes camera recordings with a so called HD 4:4:4, which is sent directly to an HD-processing machine, which is mobile or movable present on the set. In the HD-processing machine one can process the file of recordings on-line, according to extraction and after that mixing to a required format.

So, schematically the Penta Workflow in handling and/or processing and with that the needed time for, for example, 5 minutes of recorded time looks as follows:

### PENTA WORKFLOW:

| **HANDLING/PROCESSING** | **ELAPSED TIME (IN MINUTES)** |
|---|---|
| Camera operator | Variable |
| HD-machine | 0' |
| Editor | 30' |
| Viewing | 60' |
| Extraction | Variable |
| Mixing | 30' |

The advantages of the Penta Workflow are further detailed as follows:
The camera operator sends the recordings, being the image and sound material directly to the HD-machine, by which:
   - there is no material loss
   - there is no quality loss
   - a number of "double" handlings do not have to be executed anymore.

The HD-machine can immediately perform all processes, which are needed to let the "crew" and the "cast" do a final check on the spot and then can continue to the next scene, thus, by which there is no time-loss and for the benefit of the budget, it is of importance that no overrunning of the production schedule occurs.

The editor can do a lot of preliminary editing on the set and in the mobile unit, before the end-phase. The work can be immediately viewed by the executive parties, and afterwards the editor can then extract and possibly, if required, write it away completely.

The result is, that an efficient workflow (the Penta Workflow) can be guaranteed and not only a lot more productions are recorded, but automatically more people can be employed (cast as well as crew), by which the employment in the field becomes larger and productions can be financed a lot easier.

Further, the method according to the invention is further developed in such a way, that the image and sound material recorded with the mentioned camera according to the HD 4:4:4 standard is directly sent by cable guides to the mentioned specific interface, which specific interface is integrated in the mentioned HD-machine.

The advantage is, that there is no loss in quality of the material in any form and the material is immediately ready for processing.

Furthermore, the method according to the invention is further developed in such a way, that the mentioned specific interface works according to the duallink system.

The advantage of the specific interface is, that the systems can communicate with each other immediately.

Furthermore, the method according to the invention is further developed in such a way, that the mentioned HD-machine works according to the uncompressed on-line method, such as, for example, Quantel eQ.

The advantage is, that the mentioned HD-machine does all the handlings, which must normally be done physically, so that workers can be used much more efficient than before. Also, the material is at once ready for every process and all these processes can be done with the same machine.

Furthermore, the method according to the invention is further developed in such a way, that for the mentioned camera, which works according to the standard HD 4:4:4, for example, a Thomson Viper Filmstream Camera for uncompressed cinematography is chosen.

The advantage is, a much better quality of the image and sound material for the finishing and the fast obtaining thereof.

Furthermore, the method according to the invention is further developed in such a way, that the mentioned specific interface according to the duallink system with adjusted booster is placed in a combined box, called "purple"-link.

The advantage is an interface, by which it is much easier to let the systems communicate with each other immediately.

Furthermore, the method according to the invention is further developed in such a way, that with the mentioned HD-machines the next specifications of uncompressed 4:4:4 HD-RGB240 min storage are met, such as, for example, the Quantel eQ EIGER.

The advantage, when sticking to this minimum configuration, is that the method gives enough guarantees to be executed correctly.

Furthermore, a device for executing the method according to the invention is further developed in such a way, that the camera is connected with the specific interface by cables and/or wiring according to the standard HD 4:4:4, and is further integrated with the mentioned HD-machine, together with voltage sources and such and is built-in in a company van.

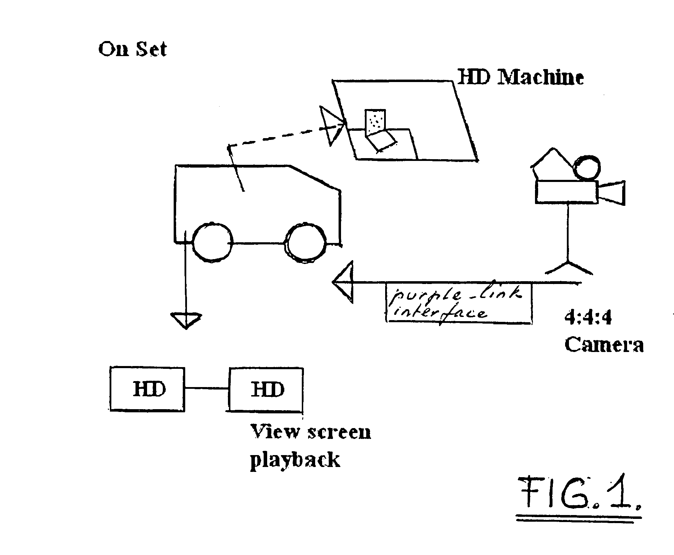

The advantage is a mobile composition of recording and processing equipment, which is placed inside a van, as schematically shown in figure 1.

Finally it has to be emphasized, that the above description constitutes a preferred embodiment of the method of the invention and that further variations and modifications are still possible without departing the scope of this patent description.

## Claims

1. Method to convert image and sound material, recorded with a camera by means of a procedure, called workflow, in an electronic way into several cinematographic, television and multimedia productions and such, in which the mentioned camera applies the image and sound material on a digital tape or hard disk raid HD 4:4:4 or HD 4:2:2, in which the recorded material is edited, processed or mixed to the required audiovisual products in a so called elapsed time, in which due to high cost for used material and material, actors, concerned executive and supporting persons and such, especially the elapsed time must be limited in order to produce as much audiovisual productions as possible within the available budgets, **characterized in that**, the image and sound material of the recording camera with digital tape or hard disk raid according to HD 4:4:4 standard is directly processed to the required audiovisual product by means of a connected specific interface thereon in a connected HD-processing machine thereon.

2. Method as claimed in claim 1, **characterized in that**, the image and sound material recorded with the mentioned camera according to the HD 4:4:4 standard is directly sent by cable guides to the mentioned specific interface, which specific interface is integrated in the mentioned HD-machine.

3. Method as claimed in claim 2, **characterized in that**, the mentioned specific interface works according to the duallink system.

4. Method as claimed in claims 1-2, **characterized in that**, the mentioned HD-machine works according to the uncompressed on-line method, such as, for example, Quantel eQ.

5. Method as claimed in claims 1-2, **characterized in that**, for the mentioned camera, which works according to the standard HD 4:4:4, for example, a Thomson Viper Filmstream Camera for uncompressed cinematography is chosen.

6. Method as claimed in claim 3, **characterized in that**, the mentioned specific interface according to the duallink system with adjusted booster is placed in a combined box, called "purple"-link.

7. Method as claimed in claim 4, **characterized in that**, with the mentioned HD-machines the next specifications of uncompressed 4:4:4 HD-RGB240 min storage are met, such as, for example, the Quantel eQ EIGER.

8. Device for executing the method as claimed in claims 1-7, **characterized in that**, the camera is connected with the specific interface by cables and/or wiring according to the standard HD 4:4:4, and is further integrated with the mentioned HD-machine, together with voltage sources and such and is built-in in a company van.

9. Device as claimed in claim 8, **characterized in that**, the mentioned company van is equipped according to the given specifications of a company specialized in this field to guarantee reliability and ergonomics.
